# EUROPEAN PATENT APPLICATION

(11) **EP 4 027 623 A1**
(43) Date of publication of application: **13.07.2022**
(21) Application number: 20859959.7
(22) Date of filing: 07.08.2020
(51) Int. Cl.: H04M 1/02, C03B 23/03, C03B 23/035, C03B 23/023

(54) **ELECTRONIC DEVICE, AND BATTERY COVER AND MANUFACTURING METHOD THEREFOR**

(30) Priority: 03.09.2019 CN 201910828515
(71) Applicant: GUANGDONG OPPO MOBILE TELECOMMUNICATIONS CORP., LTD., Dongguan, Guangdong 523860 (CN)
(72) Inventor: ZOU, Pan, Dongguan, Guangdong 523860 (CN)
(74) Representative: Ipside
(86) International application number: PCT/CN2020/107929
(87) International publication number: WO 2021/042940

(57) **Abstract**

An electronic device (100), and a battery cover (110) and a manufacturing method therefor. The battery cover (110) is used in the electronic device and comprises a body (111) and a flange (112), and the thickness of the flange (112) is greater than that of the body (111). A manufacture mold (200) comprises a first mold (210) and a second mold (220), the first mold (210) is provided with a groove (211), and the second mold (220) is provided with a protrusion (221). The manufacturing method comprises: selecting a glass sheet (300); placing the glass sheet (300) on the first mold (210), the glass sheet (300) and the groove (211) defining a sealing cavity (201); covering the glass sheet (300) with the second mold (220), the protrusion (221) facing towards the groove (211), and the protrusion (221) being in contact with the glass sheet (300); heating the first mold (210), the second mold (220), and the glass sheet (300); vacuumizing the sealing cavity (201), so that the glass sheet (300) comprising the body (111) and the flange (112), and the flange (112) being connected to the body (111) so as to define a battery compartment; cooling the first mold (210), the second mold (220), and the glass sheet (300); and processing the body (111), so that the thickness of the body (111) is smaller than that of the flange (112).

## Description

### CROSS-REFERENCE

The present application claims the Chinese priority of Chinese Patent Application No. 201910828515.3, filed on September 03, 2019, the entire contents of which are hereby incorporated by reference in its entirety.

### TECHNICAL FIELD

The present disclosure relates to the field of manufacture technologies of electronic devices, and in particular to an electronic device, a battery cover, and a method for manufacturing the battery cover.

### BACKGROUND

With the development of technology, mobile phones are updated more and more rapidly. Consumers tend to pursue more creative, newer and more attractive mobile phone products with stronger appearance expressiveness. Most of the mobile phones on the market currently have a sandwich structure with a glass battery cover, an aluminum alloy frame and a glass screen cover combined together. There is a seam between the aluminum alloy frame and the glass battery cover, the seam affects a user's grip feeling and destroys a feeling of an integration of an entire housing of a mobile phone. However, the market is currently subject to various technical constraints, a glass housing with a stable a reliable mass production is usually made in a form of hot press molding to make a curved shape with a curved surface connected to a flat surface, and there is a trend of homogenization.

With a high temperature softening, when a glass in the mold is squeezed and an irregular surface of the mold will be imprinted to the glass, i.e. a mold mark. In a severe situation, the mold mark is difficult to remove, and a roughness of an inner surface of the glass is 1-10um. Therefore, for prior hot press molding technologies, a molding temperature is normally limited to below a temperature of a softening point of a glass. With a glass of an integral structure, a height of the glass itself and a blocking of a middle frame, during polishing, a polishing brush is hard to get in contact with an inner corner connecting the middle frame and the battery cover.

In addition, in prior arts, a CNC processing is further required for a glass to shape the glass as needed. Such solution has following downsides: 1. long processing time: a processing period required by the CNC processing is 3-5 hours, which means higher costs; 2. the glass is easy to break during the process: during double-side CNC processing on the glass, the glass is easy to break due to a presence of micro-cracks in the processing process; 3. a cutter pattern is hard to remove in concave-surface CNC process, 2-3 hours of polishing time is required, and a long polishing period may cause other defects, such as a collapsed edge, etc.

### SUMMARY OF THE DISCLOSURE

An electronic device, a battery cover, and a method for manufacturing the battery cover are provided by the present disclosure. The electronic device, the battery cover, and the method for manufacturing the battery cover has advantages of a short processing period, a high quality rate.

According to an embodiment of the present disclosure, a battery cover for an electronic device is provided, wherein the battery cover includes a body and a flange, a thickness of the flange is greater than a thickness of the body.

According to an embodiment of the present disclosure, a battery cover is provided. On the one hand, the battery cover having a flange with a greater thickness than that of a body could improve a strength of the structure of the battery cover; on the other hand, the battery cover having a thinner body could reduce an overall weight of the battery cover.

According to an embodiment of the present disclosure, a method for manufacturing the battery cover is provided, a manufacturing mold used in the method includes a first mold and a second mold, the first mold includes a groove, the second mold includes a bump, wherein the method includes: selecting a glass sheet; positioning the glass sheet at the first mold to define a sealing chamber with the groove; placing the second mold over and to cover the glass sheet, wherein the bump faces towards the groove, and the bump is in contact with the glass sheet; heating the first mold, the second mold, and the glass sheet; vacuumizing the sealing chamber to deform the glass sheet to a predetermined shape; deforming the glass sheet to the predetermined shape, wherein the deformed the glass sheet comprises a body and a flange connected to the body to define a battery chamber; cooling the first mold, the second mold, and the glass sheet; and processing the body to make a thickness of the body be less than a thickness of the flange.

According to an embodiment of the present disclosure, a method for manufacturing the battery cover is provided. By using heating and vacuumizing processes, a glass sheet is processed to be in a predetermined shape. The battery cover is processed to have different thicknesses. Thus simplifying the process of the battery cover, improving a quality rate, reducing a production cycle, and saving production costs.

According to an embodiment of the present disclosure, an electronic device is provided, wherein the electronic device includes a battery cover, and the battery cover is manufactured according to the above described method for manufacturing the battery cover.

According to an embodiment of the present disclosure, an electronic device is provided. By using heating and vacuumizing processes, a glass sheet is processed to be in a predetermined shape. The battery cover is processed to have different thicknesses. Thus simplifying the process of the battery cover, improving a quality rate, reducing a production cycle, and saving production costs.

The further aspects and advantages of the present disclosure will be given in the following description, some aspects will become clear from the following description, or will be understood through an implementation of the present disclosure.

### BRIEF DESCRIPTION OF THE DRAWINGS

The above described and/or further aspects of the present disclosure will become clear and easy to understand by referring to the accompanying drawings of the embodiments.
FIG. 1 is a structural schematic diagram of an electronic device according to an embodiment of the present disclosure.
FIG. 2 is a structural schematic diagram of a manufacturing mold according to an embodiment of the present disclosure, showing a glass sheet is not deformed.
FIG. 3 is a structural schematic diagram of a manufacturing mold according to an embodiment of the present disclosure, showing the glass sheet is deformed.
FIG. 4 is an explosive diagram of a manufacturing mold according to an embodiment of the present disclosure, showing the glass sheet is deformed.
FIG. 5 is a structural schematic diagram of a battery cover of an electronic device according to an embodiment of the present disclosure.
FIG. 6 is a structural schematic diagram of a part of the glass sheet of the electronic device according to an embodiment of the present disclosure, showing a texture of the glass sheet is not trimmed.
FIG. 7 is a structural schematic diagram of a part of a glass sheet of an electronic device according to an embodiment of the present disclosure, showing the texture of the glass sheet is trimmed.
FIG. 8 is a flow chart of a method for manufacturing a battery cover according to an embodiment of the present disclosure.
FIG. 9 is a flow chart of a method for manufacturing a battery cover according to an embodiment of the present disclosure.
FIG. 10 is a flow chart of a method for manufacturing a battery cover according to an embodiment of the present disclosure.

Numerals of accompanying drawings: electronic device 100, battery cover 110, body 111, flange 112, corner 113, manufacturing mold 200, sealing chamber 201, first mold 210, groove 211, second mold 220, bump 221, glass sheet 300, texture 301.

### DETAILED DESCRIPTION

Embodiments of the present disclosure are described in detail below, and examples of the embodiments are shown in the accompanying drawings. From beginning to end, the same or similar numerals indicate the same or similar components or components having the same or similar functions. The embodiments described below by reference to the accompanying drawings are exemplary and are intended only to explain the present disclosure and not to be construed as limiting the present disclosure.

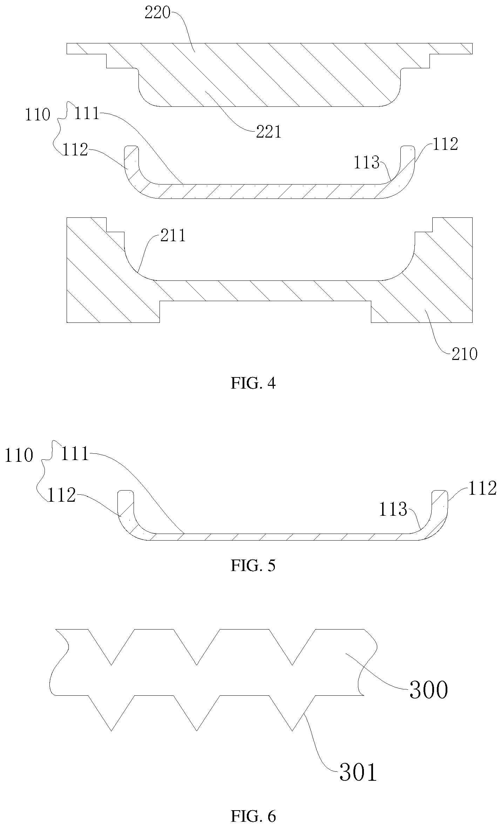

A battery cover 110 according to an embodiment of the present disclosure is described in detail by referring to FIG. 5. It should be noted that, the battery cover 110 is applied to an electronic device 100. The electronic device 100 may be a mobile phone, a pad, a lap top computer, or a wearable device. Specifically, the battery cover 110 of the electronic device 100 defines a battery chamber configured to accommodate components like batteries or circuit boards.

As shown in FIG. 5, the battery cover 110 according to an embodiment of the present disclosure is applied for the electronic device 100. The battery cover 110 includes a body 111 and a flange 112, A thickness of the flange 112 is greater than a thickness of the body 111.

The battery cover 110 according to an embodiment of the present disclosure includes the body 111 and the flange 112, and the thickness of the flange 112 is greater than the thickness of the body 111, on the one hand, the flange 112 with a greater thickness could improve a strength of the structure of the battery cover 110; on the other hand, the body being thinner could reduce an overall weight of the battery cover 110.

To simplify a process of the battery cover 110, the body 111 and the flange 112 are integrally formed. A material of the battery cover 110 is at least one of glass, plastic, and composite. The flange 111 is a middle frame of the electronic device 100.

A shown in FIG. 5, a corner radius between the body 111 and the flange 112 may be 0.5-3mm. Therefore, a stress concentration between the body 111 and the flange 112 may be reduced, and a fatigue resistance of the battery cover 110 could be improved. Furthermore, the thickness of body 111 may be 0.5-0.8mm and the thickness of the flange 112 may be 1.0-1.5mm. To further improve a structural strength of the battery cover 110, an inner surface of the body 111 includes a coating layer or a spray layer.

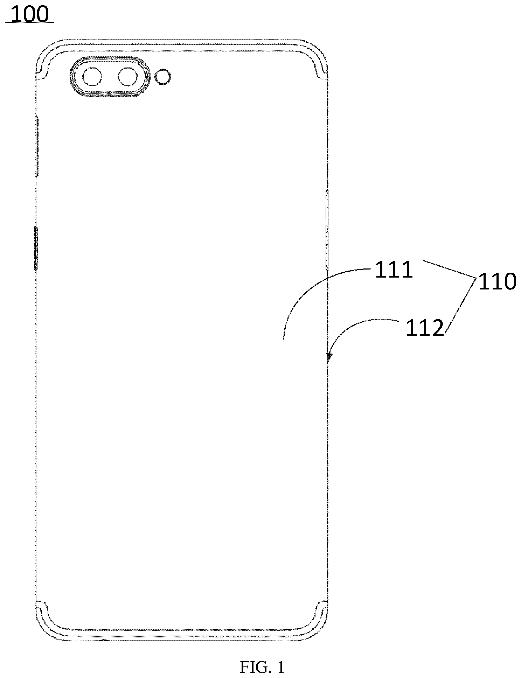

A method for manufacturing the battery cover 110 of the electronic device 100 and the electronic device 100 according to an embodiment of the present disclosure is described below by referring to FIGs. 1 to 9. It should be noted that, the electronic device 100 may be a mobile phone, a pad, a lap top computer, or a wearable device. Specifically, the battery cover 110 of the electronic device 100 defines a battery chamber configured to accommodate components like batteries or circuit boards.

When manufacturing and processing the battery cover 110, a manufacturing mold 200 is used. The manufacturing mold 200 includes a first mold 210 and a second mold 220. The first mold 210 defines a groove 211 and the second mold 220 includes a bump 221. It should be noted that, the first mold 210 may perform clamping with the second mold 220. When the first mold 210 and the second mold 220 are clamped, the bump 221 may be received inside the groove 211, and the bump 221 and the groove 211 define a space configured to receive a glass sheet 300.

It should be noted that, a porosity of at least one of the first mold 210 and the second mold 220 may be 12%-18%. In order to facilitate heat absorption of the first mold 210 and the second mold 220, at least one of the first mold 210 and the second mold 220 is a heat absorption mold. Understandably, at least one of the first mold 210 and the second mold 220 may be made of heat absorption materials.

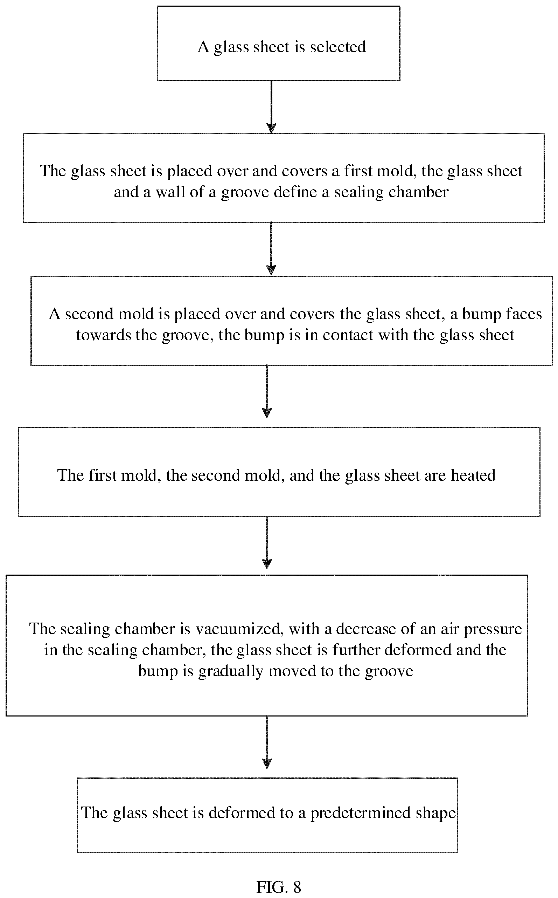

As shown in FIG. 8, the method for manufacturing the battery cover 110 of the electronic device according to an embodiment of the present disclosure includes the following operations.

A glass sheet 300 is selected.

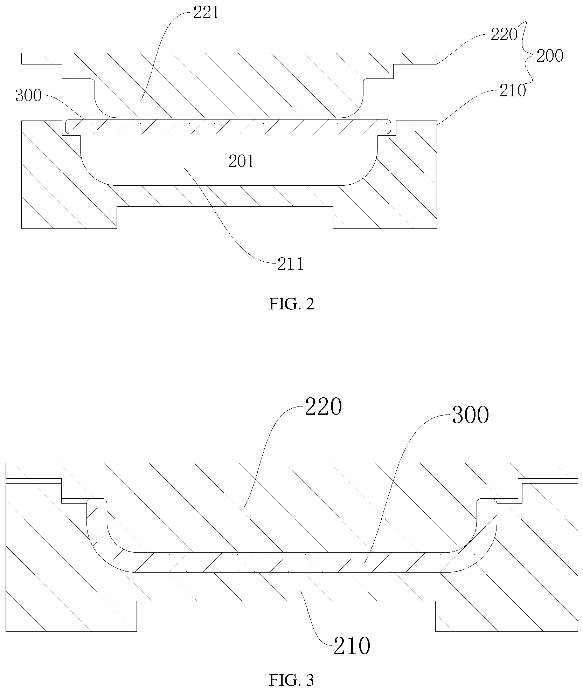

As shown in FIG. 2, the glass sheet 300 is placed over and covers the first mold 210, the glass sheet 300 and the wall of the groove 211 define a sealing chamber 201.

As shown in FIG. 2 and FIG. 4, the second mold 220 is placed over and covers the glass sheet 300, the bump 221 faces towards the groove 211, and the bump 221 is in contact with the glass sheet 300. At this point, the glass sheet 300 is positioned between the first mold 210 and the second mold 220.

As shown in FIG. 3, the first mold 210, the second mold 220, and the glass sheet 300 are heated. Since the glass sheet 300 has a characteristic of softening when being heated, during the heating process, the glass sheet 300 gradually deforms and attaches towards an inner surface of the groove 211. Since the bump 221 of the second mold 220 is abutted against the glass sheet 300, the manufacturing mold 200 may accelerate a deformation of the glass sheet 300.

As shown in FIG. 3, to further accelerate the deformation of the glass sheet 300, the sealing chamber 201 is vacuumized. With a decrease of air pressure inside the sealing chamber 201, the glass sheet 300 is further deformed. The bump 221 is gradually moved into the groove 211.

As shown in FIG. 3, the glass sheet 300 is deformed to a predetermined shape. At this point, the bump 221 and the groove 211 define a space configured to receive the glass sheet 300. An outer surface of the bump 221 is attached against one side surface of the glass sheet 300, and the inner surface of the groove 211 is attached against another side surface of the glass sheet 300. Therefore, the glass sheet 300 is processed to become the battery cover 110.

The method for manufacturing the battery cover 110 of the electronic device according to an embodiment of the present disclosure, by using the characteristic of a glass softens when being heated, the glass sheet 300 is processed, by heating and vacuumizing processes, to be in a predetermined shape, thereby simplifying the process of the battery cover 110, improving a quality rate, reducing a production cycle, and saving production costs.

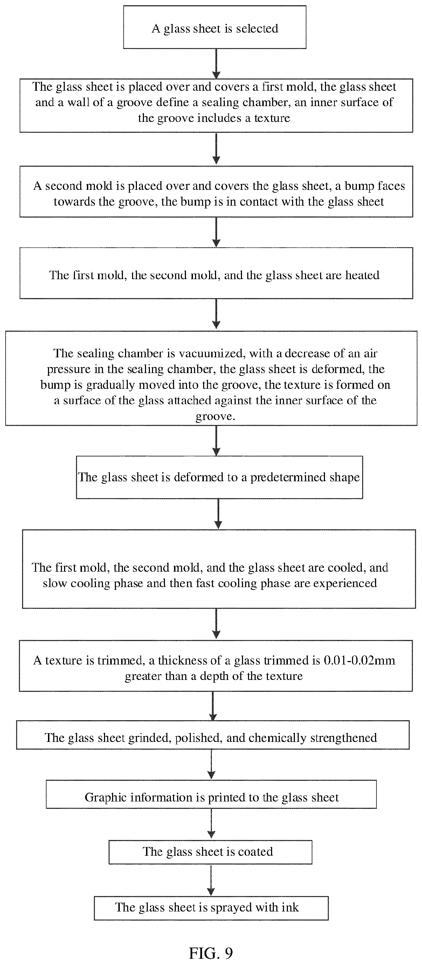

As shown in FIG. 9, to facilitate explaining operations of the method for manufacturing the battery cover 110, each operation is numbered. It should be noted that, the numbers are not to limit an order of the manufacturing method. The method for manufacturing the battery cover 110 of an electronic device according to an embodiment of the present disclosure includes the following operations.

First operation: the glass sheet 300 is selected. A thickness of the glass sheet 300 may be 1.0-1.5mm and a temperature of a softening point of the glass sheet 300 may be 700°C-850°C.

Second operation: as shown in FIG. 2, the glass sheet 300 is placed over and covers the first mold 210. The glass sheet 300 and the groove 211 define the sealing chamber 201.

Third operation: as shown in FIG. 2 and FIG. 4, the second mold 220 is placed over and covers the glass sheet 300. The bump 221 faces towards the groove 211 and the bump 221 is in contact with the glass sheet 300. At this point, the glass sheet 300 is positioned between the first mold 210 and the second mold 220.

Fourth operation: as shown in FIG. 3, the first mold 210, the second mold 220, and the glass sheet 300 are heated, and a heating temperature is 800°C-850°C. Since the glass sheet 300 has a characteristic of softening when being heated, during the heating process, the glass sheet 300 gradually deforms and attaches towards an inner surface of the groove 211. Since the bump 221 of the second mold 220 is abutted against the glass sheet 300, the manufacturing mold 200 may accelerate the deformation of the glass sheet 300. To facilitate a flow of work and improve a heating efficiency, the first mold 210, the second mold 220, and the glass sheet 300 overall move three to four stations.

It should be noted that, when the first mold 210, the second mold 220, and the glass sheet 300 are heated, a non-contact heating method is adopted. The "non-contact heating method" herein may be understood as a heat source is not in direct contact with the glass sheet 300, which is also called as thermo-vacuum-forming; i.e. the first mold 210 or the second mold 220 is heated by heat absorption and the heat is transferred to the glass sheet 300 or the corresponding second mold 220 or first mold 210 by heat transfer. For example, when the first mold 210 is heated by the non-contact heating method, heat is transferred to the glass sheet 300 and the second mold 220 through the first mold 210.

Since an outer surface of a glass is vacuum-formed, mold marks are mainly on an outer surface of a product. A roughness of an inner surface of the formed glass is 0.1-1um, and a mirror effect on the inner surface may be acquired by only lightly polishing. Therefore, a problem of an inner corner in a bending of the glass having mold marks in prior technology of hot press forming is solved. Since the glass is preprocessed to be a needed shape, only a CNC processing on a surface of the glass is required, as a result, a processing time could be reduced and the glass is not fragile, and a cutter texture on the surface of the glass is easy to remove.

Fifth operation: as shown in FIG. 3, to further accelerate the deformation of the glass sheet 300, the sealing chamber 201 is vacuumized. The vacuumizing time may be 60-90s and the vacuum degree is 0.1-1×10⁻⁸MPa. With a decrease of the air pressure in the sealing chamber 201, the glass sheet 300 is further deformed and the bump 221 is gradually moved to the groove 211. To facilitate a flow of work and improve a heating efficiency, the first mold 210, the second mold 220, and the glass sheet 300 overall move two to three stations.

Sixth operation: as shown in FIG. 3, the glass sheet 300 is deformed to a predetermined shape. At this point, the bump 221 and the groove 211 define a space configured to receive the glass sheet 300. An outer surface of the bump 221 is attached against one side surface of the glass sheet 300 and an inner surface of the groove 211 is attached against another side surface of the glass sheet 300. Therefore, the glass sheet 300 is processed to become the battery cover 110.

Seventh operation: the first mold 210, the second mold 220, and the glass sheet 300 are cooled. During the cooling process, the first mold 210, the second mold 220 and the glass sheet 300 overall may first experience a slow cooling phase, and then a fast cooling phase. It should be noted that, during the cooling process, a cooling speed of an overall structure formed by the first mold 210, the second mold 220, and the glass sheet 300 in fast cooling phase is V₁ (i.e. a value of temperature decrease in a unit time), a cooling speed of the overall structure formed by the first mold 210, the second mold 220, and the glass sheet 300 in slow cooling phase is V2 (i.e. a value of temperature decrease in a unit time), the V₁ > V₂.

Furthermore, in the fast cooling phase, the first mold 210, the second mold 220, and the glass sheet 300 overall move one to two stations. A deformed glass is taken out from a mold. Since the second mold 220 is not pressurized during the forming process, the mold marks caused by pressing of the first mold 210 and the second mold 220 during the forming process may be relatively light. Therefore, a problem of serious mold marks being difficult to polish and remove during a hot press forming process due to an excessive temperature of a glass is solved.

Eighth operation: the glass sheet 300 is grinded, polished, and chemically strengthened.

Ninth operation: the glass sheet 300 is coated.

Tenth operation: graphic information is printed to the glass sheet 300.

Eleventh operation: the glass sheet 300 is sprayed with ink. At this point, the glass sheet 300 is processed to become the battery cover 110.

In addition, to fulfill a requirement of a texture 301 of the battery cover 110, the texture 301 may be processed on the glass sheet 300 by a mold. For example, the outer surface of the bump 221 and the inner surface of the groove 211 includes the texture 301. When the sealing chamber 201 is vacuumized, the texture 301 is formed on surfaces of the glass sheet 300 attached against the outer surface of the bump 221 and the inner surface of the groove 211. Since the glass sheet 300 is being heated at this point, it has a certain liquidity. The texture 301 of the bump 221 and the groove 211 may be printed to the surfaces of the glass sheet 300. Thus, while a heat forming process is performed on the glass sheet 300, the texture 301 is formed; thereby not only omitting a processing operation of processing texture 301, but also avoiding a damage of the glass sheet 300 caused by a process of turning the texture 301; and improving a process efficiency and a quality rate.

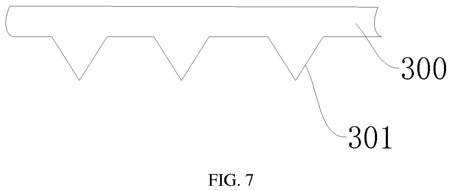

To enhance an effect of the texture 301, after the first mold 210, the second mold 220, and the glass sheet 300 are cooled, the texture 301 may be trimmed, and thereby enhancing the aesthetic appearance of the texture 301. Furthermore, when the texture 301 is trimmed, a thickness of a trimmed glass may be 0.01-0.02mm greater than a depth of the texture 301. As shown in FIG. 6, at this point, the texture 301 of the glass sheet 300 is not trimmed. As shown in FIG. 7, at this point, the texture 301 of the glass sheet 300 is trimmed.

The electronic device 100 according to an embodiment of the present disclosure includes a battery cover 110. The battery cover 110 may be manufactured according to the above described manufacturing method.

The electronic device 100 according to an embodiment of the present disclosure, by using the characteristic of a glass softens when heated, the glass sheet is processed, by heating and vacuumizing processes, to be in a predetermined shape, thereby simplifying the process of the battery cover 110, improving a quality rate, reducing a production cycle of the electronic device 100, and saving production costs of the electronic device 100.

A method for manufacturing the battery cover 110 of the electronic device and the electronic device 100 according to an embodiment of the present disclosure is described below by referring to FIGs. 1 to 10. It should be noted that, the electronic device 100 may be a mobile phone, a pad, a lap top computer, or a wearable device. Specifically, the battery cover 110 of the electronic device defines a battery chamber which is configured to place components like batteries or circuit boards.

When processing and manufacturing the battery cover 110, a manufacturing mold 200 is used. The manufacturing mold 200 includes a first mold 210 and a second mold 220. The first mold 210 defines a groove 211 and the second mold 220 includes a bump 221. It should be noted that, the first mold 210 may perform clamping with the second mold 220. When the first mold 210 and the second mold 220 are clamped, the bump 221 may be received inside the groove 211 and the bump 221 and the groove 211 define a space configured to receive a glass sheet 300.

It should be noted that, a porosity of at least one of the first mold 210 and the second mold 220 may be 12%-18%. In order to facilitate heat absorption of the first mold 210 and the second mold 220, at least one of the first mold 210 and the second mold 220 is a heat absorption mold. Understandably, at least one of the first mold 210 and the second mold 220 may be made of heat absorption materials.

As shown in FIG. 9, the method for manufacturing the battery cover 110 of the electronic device according to an embodiment of the present disclosure includes the following operations.

A glass sheet 300 is selected.

As shown in FIG. 2, the glass sheet 300 is placed over and covers the first mold 210, the glass sheet 300 and the groove 211 define a sealing chamber 201.

As shown in FIG. 2 and FIG. 4, the second mold 220 is placed over and covers the glass sheet 300, the bump 221 faces towards the groove 211, and the bump 221 is in contact with the glass sheet 300. At this point, the glass sheet 300 is positioned between the first mold 210 and the second mold 220.

As shown in FIG. 3, the first mold 210, the second mold 220, and the glass sheet 300 are heated. Since the glass sheet 300 has a characteristic of softening when being heated, during the heating process, the glass sheet 300 gradually deforms and attaches towards an inner surface of the groove 211. Since the bump 221 of the second mold 220 is abutted against the glass sheet 300, the manufacturing mold 200 may accelerate a deformation of the glass sheet 300.

As shown in FIG. 3, to further accelerate the deformation of the glass sheet 300, a sealing chamber 201 is vacuumized. With a decrease of air pressure inside the sealing chamber 201, the glass sheet 300 is further deformed. The bump 221 is gradually moved into the groove 211.

As shown in FIG. 3, the glass sheet 300 is deformed to a predetermined shape. The glass sheet 300 includes a body 111 and a flange 112, and the flange 112 is connected to the body 111 to define a battery chamber. At this point, the battery chamber may be configured to accommodate a battery or a circuit board, the bump 221 and the groove 211 define a space configured to receive the glass sheet 300. An outer surface of the bump 221 is attached against one side surface of the glass sheet 300, and an inner surface of the groove 211 is attached against another side surface of the glass sheet 300.

The first mold 210, the second mold 220, and the glass sheet 300 are cooled.

A body 111 is processed to make a thickness of the body 111 be less than a thickness of the flange 112. The battery cover 110 acquired from such process has different thicknesses, thereby fulfilling a usage need of an electronic device.

The method for manufacturing the battery cover 110 of the electronic device according to an embodiment of the present disclosure, by using the characteristic of a glass softens when being heated, the glass sheet is processed, by heating and vacuumizing processes, to be in a predetermined shape. The battery cover 110 my have different thicknesses through further processing. Thus, the process of the battery cover 110 is simplified, different usage needs is fulfilled, a quality rate is improved, a production cycle reduced, and production costs are saved.

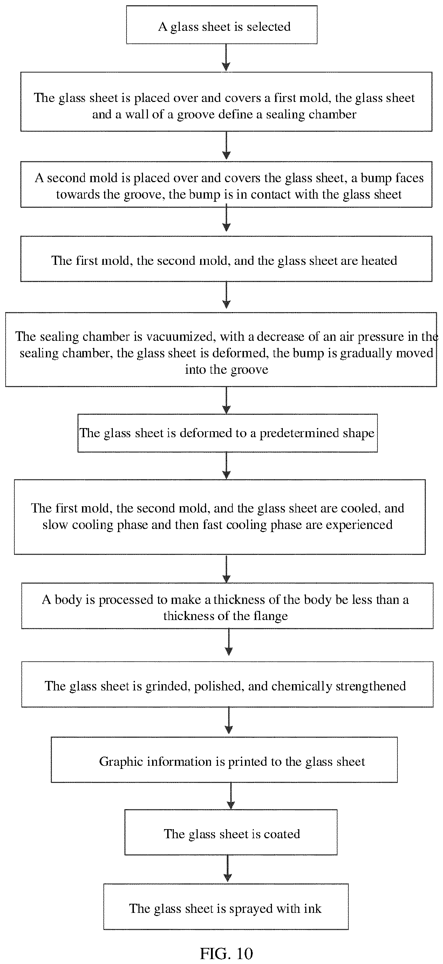

As shown in FIG. 10, to facilitate explaining operations of the method for manufacturing the battery cover 110, each operation is numbered. It should be noted that, the numbers are not to limit an order of the manufacturing method. The method for manufacturing the battery cover 110 of the electronic device according to an embodiment of the present disclosure includes the following.

First operation: the glass sheet 300 is selected. A thickness of the glass sheet 300 may be 1.0-1.5mm and a temperature of a softening point of the glass sheet 300 may be 700°C-850°C.

Second operation: as shown in FIG. 2, the glass sheet 300 is placed over and covers the first mold 210. The glass sheet 300 and the groove 211 define a sealing chamber 201.

Third operation: as shown in FIG. 2 and FIG. 4, the second mold 220 is placed over and covers the glass sheet 300. The bump 221 faces towards the groove 211 and the bump 221 is in contact with the glass sheet 300. At this point, the glass sheet 300 is positioned between the first mold 210 and the second mold 220.

Fourth operation: as shown in FIG. 3, the first mold 210, the second mold 220, and the glass sheet 300 are heated, and a heating temperature is 800°C-850°C. Since the glass sheet 300 has a characteristic of softening when being heated, during the heating process, the glass sheet 300 gradually deforms and attaches towards an inner surface of the groove 211. Since the bump 221 of the second mold 220 is abutted against the glass sheet 300, the manufacturing mold 200 may accelerate the deformation of the glass sheet 300. To facilitate a flow of work and improve a heating efficiency, the first mold 210, the second mold 220, and the glass sheet 300 overall move three to four stations.

It should be noted that, when the first mold 210, the second mold 220, and the glass sheet 300 are heated, a non-contact heating method is adopted. The "non-contact heating method" herein may be understood as a heat source is not in direct contact with the glass sheet 300; i.e. the first mold 210 or the second mold 220 is heated by heat absorption and the heat is transferred to the glass sheet 300 or the corresponding second mold 220 or first mold 210 by heat transfer. For example, when the first mold 210 is heated by the non-contact heating method, heat is transferred to the glass sheet 300 and the 210 through the 220.

Since an outer surface of a glass is vacuum-formed, mold marks are mainly on an outer surface of a product. A roughness of an inner surface of the formed glass is 0.1-1um and a mirror effect on the inner surface may be acquired by only lightly polishing. Therefore, a problem of an inner corner in a bending of the glass having mold marks in prior technology of hot press forming is solved. Since the glass is preprocessed to be a needed shape only a CNC processing on a surface of the glass is required, a processing time could be reduced and the glass is not fragile, and a cutter texture on the surface of the glass is easy to remove.

Fifth operation: as shown in FIG. 3, to further accelerate a deformation of the glass sheet 300, the sealing chamber 201 is vacuumized. The vacuumizing time may be 60-90s and the vacuum degree is 0.1-1×10⁻⁸MPa. With a decrease of the air pressure in the sealing chamber 201, the glass sheet 300 is further deformed and the bump 221 is gradually moved to the groove 211. To facilitate a flow of work and improve a heating efficiency, the first mold 210, the second mold 220, and the glass sheet 300 overall move two to three stations.

Sixth operation: as shown in FIG. 3, the glass sheet 300 is deformed to a predetermined shape. The glass sheet 300 includes a body 111 and a flange 112. The flange 112 is connected to the body 111 to define a battery chamber. At this point, the battery chamber may be configured to accommodate a battery or a circuit board. The bump 221 and the groove 211 define a space configured to receive the glass sheet 300. An outer surface of the bump 221 is attached against one side surface of the glass sheet 300 and an inner surface of the groove 211 is attached against another side surface of the glass sheet 300. Thus, the glass sheet 300 is processed to become the battery cover 110. To enhance an aesthetic appearance of the battery cover 110, a rounded corner 113 exists between the body 111 and the flange 112. The corner radius of the rounded corner is 0.5-3mm.

Since a liquidity of the glass is not enough in a low temperature, and a hot press forming only pressurize a part of the glass, it is difficult to fit the glass into a shape of a mold. Thus, it is hard for the hot press forming to form a curved surface of a rounded corner less than 3mm. By using heat absorption to form the glass sheet, a corner radius may be reduced.

Seventh operation: the first mold 210, the second mold 220, and the glass sheet 300 are cooled. During the cooling process, the first mold 210, the second mold 220 and the glass sheet 300 overall may first experience a slow cooling phase, and then a fast cooling phase. It should be noted that, during the cooling process, a cooling speed of an overall structure formed by the first mold 210, the second mold 220, and the glass sheet 300 in fast cooling phase is V₁ (i.e. a value of temperature decrease in a unit time), a cooling speed of the overall structure formed by the first mold 210, the second mold 220, and the glass sheet 300 in slow cooling phase is V2 (i.e. a value of temperature decrease in a unit time), the V₁ > V₂.

Furthermore, in the fast cooling phase, the first mold 210, the second mold 220, and the glass sheet 300 overall move one to two stations. A deformed glass is taken out from a mold. Since the second mold 220 is not pressurized during the forming process, the mold marks caused by pressing of the first mold 210 and the second mold 220 during the forming process may be relatively light. Therefore, a problem of serious mold marks being difficult to polish and remove during a hot press forming process due to an excessive temperature of a glass is solved.

Eighth operation: the body 111 is processed to make a thickness of the body 111 be less than a thickness of the flange 112, the thickness of body 111 may be 0.5-0.8mm.

Ninth operation: the glass sheet 300 is grinded, polished, and chemically strengthened.

Tenth operation: the glass sheet 300 is coated.

Eleventh operation: graphic information is printed to the glass sheet 300.

Twelfth operation: the glass sheet 300 is sprayed with ink. At this point, the glass sheet 300 is processed to become the battery cover 110. The battery cover 110 acquired from such process has different thicknesses, thereby fulfilling a usage need of an electronic device.

In addition, to fulfill a requirement of a texture 301 of the battery cover 110, the texture 301 may be processed on the glass sheet 300 by a mold. For example, the outer surface of the bump 221 and the inner surface of the groove 211 includes the texture 301. When the sealing chamber 201 is vacuumized, the texture 301 is formed on surfaces of the glass sheet 300 attached against the outer surface of the bump 221 and the inner surface of the groove 211. Since the glass sheet 300 is being heated at this point, it has a certain liquidity. The texture 301 of the bump 221 and the groove 211 may be printed to the surfaces of the glass sheet 300. Thus, while a heat forming process is performed on the glass sheet 300, the texture 301 is formed; thereby not only omitting a processing operation of processing texture 301, but also avoiding a damage of the glass sheet 300 caused by a process of turning the texture 301; and improving a process efficiency and a quality rate.

To enhance an effect of the texture 301, after the first mold 210, the second mold 220, and the glass sheet 300 are cooled, the texture 301 may be trimmed, and thereby enhancing the aesthetic appearance of the texture 301. Furthermore, when the texture 301 is trimmed, a thickness of a trimmed glass may be 0.01-0.02mm greater than a depth of the texture 301. As shown in FIG. 6, at this point, the texture 301 of the glass sheet 300 is not trimmed. As shown in FIG. 7, at this point, the texture 301 of the glass sheet 300 is trimmed.

The electronic device 100 according to an embodiment of the present disclosure includes a battery cover 110. The battery cover 110 may be manufactured according to the above described manufacturing method.

The electronic device 100 according to an embodiment of the present disclosure, by using the characteristic of a glass softens when being heated, the glass sheet is processed, by heating and vacuumizing processes to be in a predetermined shape, thereby, simplifying the process of the battery cover 110, improving a quality rate, reducing a production cycle of the electronic device 100, and saving production costs of the electronic device 100.

In the descriptions of the present specification, terminologies like "one embodiment", "some embodiments", "an exemplary embodiment", "an example", "specific example", or "some examples" means that specific features, structures, materials, or characteristics described in conjunction with the embodiments or examples are included in at least one embodiment or example of the present disclosure. In the present specification, a schematic representation of the above terms does not necessarily refer to the same embodiment or example. Moreover, the specific features, structures, materials, or characteristics may be combined in any one or more embodiments or examples in a suitable manner.

Although embodiments of the present disclosure have been shown and described, one skilled in the art may understand that without departing from the principles and purposes of the present disclosure, a variety of variations, modifications, replacements and variants of embodiments may be made; the scope of the present disclosure is defined by the claims and their equivalents.

## Claims

1. A battery cover for an electronic device, comprising a body and a flange, wherein a thickness of the flange is greater than a thickness of the body.

2. The battery cover as claimed in claim 1, wherein the body is integrated with the flange.

3. The battery cover as claimed in claim 2, wherein a corner radius between the body and the flange is 0.5-3mm.

4. The battery cover as claimed in any one of claim 2 or claim 3, wherein the thickness of the body is 0.5-0.8mm, and the thickness of the flange is 1.0-1.5mm.

5. The battery cover as claimed in any one of claims 2 to 4, wherein an inner surface of the body comprises a coating layer or a spray layer.

6. The battery cover as claimed in any one of claims 2 to 5, wherein the flange is a middle frame of the electronic device.

7. The battery cover as claimed in any one of claims 1 to 6, wherein a material of the battery cover is at least one of glass, plastic, and composite.

8. A method for manufacturing a battery cover of an electronic device, a manufacturing mold used in the method comprising a first mold and a second mold, the first mold comprising a groove, the second mold comprising a bump,
wherein the method comprises:
selecting a glass sheet;
positioning the glass sheet at the first mold to define a sealing chamber with the groove;
placing the second mold over and to cover the glass sheet, wherein the bump faces towards the groove, and the bump is in contact with the glass sheet;
heating the first mold, the second mold, and the glass sheet;
vacuumizing the sealing chamber to deform the glass sheet to a predetermined shape;
deforming the glass sheet to the predetermined shape, wherein the deformed glass sheet comprises a body and a flange connected to the body to define a battery chamber;
cooling the first mold, the second mold, and the glass sheet; and
processing the body to make a thickness of the body be less than a thickness of the flange.

9. The method as claimed in claim 8, wherein in the heating the first mold, the second mold, and the glass sheet, a heating temperature is 800°C-850°C.

10. The method as claimed in any one of claim 8 or claim 9, wherein in the vacuumizing the sealing chamber, a time for vacuumizing is 60-90s.

11. The method as claimed in any one of claims 8 to 10, wherein in the vacuumizing the sealing chamber, a vacuum degree is 0.1-1×10⁻⁸MPa.

12. The method as claimed in any one of claims 8 to 11, wherein at least one of the first mold and the second mold is a heat absorption mold.

13. The method as claimed in any one of claims 8 to 12, wherein in the cooling the first mold, the second mold, and the glass sheet, the first mold, the second mold and the glass sheet experienceslow cooling phase and then fast cooling phase.

14. The method as claimed in any one of claims 8 to 13, wherein a corner exists between the body and the flange.

15. The method as claimed in claim 14, wherein a corner radius of the corner is 0.5-3mm.

16. The method as claimed in any one of claims 8 to 15, wherein in the processing the body to make a thickness of the body be less than a thickness of the flange, a thickness of the body is 0.5-0.8mm.

17. The method as claimed in any one of claims 8 to 16, wherein a texture exists in the bump and an inner surface of the groove,
in the vacuumizing the sealing chamber, the texture is formed on surfaces of the glass sheet in contact with the outer surface of the bump and the inner surface of the groove;
trimming the texture after cooling the first mold, the second mold and the glass sheet.

18. The method as claimed in any one of claims 8 to 17, wherein after the cooling the first mold, the second mold, and the glass sheet, the glass sheet is grinded, polished, chemically strengthened, coated, printed with graphic information, and sprayed with ink.

19. The method as claimed in claims 8 to 18, wherein in the heating the first mold, the second mold, and the glass sheet, the first mold or the second mold is heated by non-contact heating.

20. An electronic device comprising a battery cover, wherein the battery cover is manufactured according to the method for manufacturing a battery cover of an electronic device as claimed in any one of claims 8 to 19.
